# EUROPÄISCHE PATENTSCHRIFT

(11) **EP 1 982 153 B1**
(45) Veröffentlichungstag und Bekanntmachung des Hinweises auf die Patenterteilung: **17.09.2014**
(21) Anmeldenummer: 07704338.8
(22) Anmeldetag: 02.02.2007
(51) Int. Cl.: G01K 1/08, G01K 7/18

(54) **WIDERSTANDSTHERMOMETER**
RESISTANCE THERMOMETER
THERMOMETRE A RESISTANCE

(30) Priorität: 03.02.2006 DE 202006001883 U
(43) Veröffentlichungstag der Anmeldung: 22.10.2008
(73) Patentinhaber: EPHY-MESS Gesellschaft für elektro-physikalische Messgeräte mbH, 65205 Wiesbaden-Delkenheim (DE)
(72) Erfinder: SCHARFENBERG, Volker, 65205 Wiesbaden (DE); HERDT, Gerhard, 35510 Butzbach (DE); BECKER, Andreas, 65191 Wiesbaden (DE)
(74) Vertreter: WSL Patentanwälte Partnerschaft mbB
(86) Internationale Anmeldenummer: PCT/EP2007/051051
(87) Internationale Veröffentlichungsnummer: WO 2007/088210

(56) Entgegenhaltungen:
- DE-A1- 19 820 005
- DE-U1- 29 907 768
- US-A- 4 317 367
- US-A- 5 178 468
- US-A1- 2002 071 475

## Beschreibung

Die vorliegende Erfindung betrifft ein Widerstandsthermometer mit mindestens einem temperaturabhängigen Widerstandselement, welches mindestens zwei Anschlußkontakte aufweist, mit einem Träger, auf welchem das Widerstandselement in der Weise fixierbar ist, daß es mit einem Gegenstand, dessen Temperatur zu messen ist, in guten thermischen Kontakt bringbar ist und mit elektrischen Zuleitungen, welche für die Verbindungen der elektrischen Anschlußkontakte des Widerstandselements mit einem Messinstrument vorgesehen sind.

Aus der US 2002/0071475 A1 ist ein Temperatursensor mit den vorstehenden Merkmalen bekannt, bei welchem das Trägermaterial ein flexibles Substrat für elektrische Schaltkreise ist. Bei diesem Temperatursensor ist an einem Endabschnitt des Trägermaterials ein Thermistor vorgesehen, wobei anstelle eines Temperatursensors auch mehrere Temperatursensoren am abgelegenen Ende des Trägers vorgesehen sein können, deren genaue Anordnung aber nicht beschrieben wird.

Das Dokument US 5,178,468 beschreibt einen Temperaturmesssensor, welcher insbesondere für die Anwendung im medizinischen Bereich, beispielsweise als Fieberthermometer, ausgestattet ist. Auch in diesem Fall ist ein einzelner Thermistor an einem von den Anschlusskontakten entfernten Ende eines dünnen, blattförmigen Trägermaterials angeordnet, das eine entsprechende Flexibilität bietet.

Die DE 198 20 005 A1 beschreibt einen flächigen Temperatursensor mit einer Vielzahl von in Reihe und parallel geschalteten Temperaturmesswiderständen, die über eine Fläche verteilt sind.

Das US-Patent 4,317,367 beschreibt wiederum einen dünnen, blattförmigen und damit flexiblen Temperatursensor, der wiederum für medizinische Anwendungen, d. h. beispielsweise für Fiebermessungen, vorgesehen ist. Auch in diesem Fall befindet sich ein einzelner Temperatursensor am Ende eines mehr oder weniger flexiblen, blattförmigen Trägers.

Aus dem Deutschen Gebrauchsmuster DE 299 07 768 U1 ist ein Oberflächentemperaturfühler bekannt, bei dem auf einer flexiblen Unterlage ein elektrischer Leiter als Temperatursensor angebracht ist, wobei als Temperatursensoren mehrere diskrete Messwiderstände angeordnet sind, die auf der flexiblen Unterlage befestigt und in Form von Reihen und/oder Parallelschaltungen über Leiterbahnen elektrisch miteinander verbunden sind. in einer Ausführungsform sind 4 Pt-SMD-Elemente symmetrisch angeordnet, die durch eine Kombination von Reihen- und Parallelschaltung einen Gesamtwiderstand von 100 OHM ergeben. Bezüglich flexibler rechteckiger Temperaturfühler wird auch das Eingießen derselben in Nutenfühler angesprochen.

Widerstandsthermometer sind in vielfältigen Ausgestaltungen im Stand der Technik bekannt. Beispielsweise sind im Stand der Technik sogenannte Nutenthermometer bekannt, die für die Erfassung von Temperaturen an bzw. in Maschinen und Anlagen und für deren thermischen Schutz vorgesehen sind. Solche Thermometer sind typischerweise in Nuten von elektrischen Motoren und Generatoren eingebaut und haben im allgemeinen die Bauform eines dünnen, länglichen Quaders von bis zu 1 m Länge, einer Breite von ca. 5 bis 15 Millimetern und einer Dicke oder Höhe zwischen typischerweise 1 und 5 mm, wobei Abweichungen von diesen Maßen ohne weiteres möglich sind.

Diese bekannten Widerstandsthermometer enthalten als temperaturabhängiges Widerstandselement einen auf einen stabförmigen Träger aufgewickelten, dünnen Platindraht, wobei Länge und Durchmesser eines solchen Drahts üblicherweise so gewählt werden, daß der Widerstand entweder bei 0° C oder bei 300 K einen bestimmten, fest vorgegebenen Widerstandswert, wie zum Beispiel 100 Ω hat. Derartige Widerstandsthermometer sind zwar sehr zuverlässig, genau und auch temperaturbeständig, sind jedoch in der Herstellung relativ aufwendig. Platin ist als Material relativ teuer, so daß man zur Reduzierung der Materialkosten sehr dünne Platindrähte als Widerstandselemente verarbeiten muß. Diese sind aber in ihrer Handhabung sehr schwierig und auch der Abgleich auf bestimmte, fest vorgegebene Widerstandswerte bei gegebenen Temperaturen ist aufwendig und schwierig. Der dünne Draht muß aufwendig auf einem entsprechenden Träger befestigt werden und die elektrischen Zuleitungen benötigen in der Regel eine Zugentlastung. Die Flexibilität derartiger Thermometer ist begrenzt, da bei einem Verbiegen des Trägers eine gewisse Zugspannung auf den empfindlichen, dünnen Platindraht ausgeübt wird.

Daneben sind auch andere Widerstandsthermometer bekannt welche als Widerstandselement beispielsweise einen Dünnschichtwiderstand aufweisen, der ebenfalls ein Platinwiderstand sein kann, jedoch auch aus anderen Materialien mit temperaturabhängigem Widerstand bestehen könnte, einschließlich Halbleitermaterial, speziellen Legierungen Halbleiter- oder Metallkontakten etc. Diese Widerstandelemente haben allerdings den Nachteil, daß sie relativ kompakt sind, damit nur eine örtlich begrenzte Punktmessung durchführen können und die Umgebungstemperatur langsamer annehmen als ein dünner Platindraht.

Gegenüber dem vorstehend diskutierten Stand der Technik liegt der vorliegenden Erfindung die Aufgabe zugrunde, ein Widerstandsthermometer zu schaffen, welches einfach und kostengünstig herzustellen ist, eine gute Wärmekontaktierung ermöglicht, für die Messung ausgedehnterer Bereiche auslegbar ist und welches zumindest für einfache Anwendungsfälle in gleicher oder ähnlicher Weise einsetzbar ist wie die aufwendigeren Thermometer, die mit Platindraht als Widerstandselement ausgestattet sind, wobei das Thermometer für die Anwendung als Nutenthermometer in Maschinenelementen geeignet und bis mindestens 180°C warmfest ist.

Diese Aufgabe wird durch eine Widerstandsthermometer mit den Merkmalen des Anspruchs 1 gelöst.

Unter "eingebettet" sollen dabei im Sinne der vorliegenden Erfindung gemäss Anspruch 1 auch auf einem Kunststoffträgermaterial oberflächlich aufgebrachte, z. B. als Schicht aufgetragene, Leiterbahnen verstanden werden, wobei allerdings ein Umschließen der Leiterbahnen durch das Kunststoffmaterial auf mindestens drei Seiten, insbesondere auf allen vier Seiten, bevorzugt ist.

Gemäß der vorliegenden Erfindung ist also der Träger, auf welchem ein Widerstandselement in der Weise befestigt wird, daß es in guten thermischen Kontakt mit der Meßumgebung gebracht werden kann, mit integrierten Leiterbahnen versehen, wobei außerdem der Träger ein in mindestens einer Richtung leicht biegbares Kunststoffmaterial ist. Es versteht sich, daß der Träger demnach auch gemeinsam mit den darin eingebetteten elektrischen Leiterbahnen in einer Richtung leicht biegbar ist und damit sehr einfach und leicht an die Geometrie gegebener Meßobjekte anpaßbar ist.

Die integrierte Ausbildung von Träger und elektrischen Zuleitungen erleichtert den Vorgang des Fixierens und Kontaktierens des Widerstandselementes, da anstelle der vorherigen drei Elemente, nämlich Widerstandelement, Träger und Zuleitungen, die gemeinsam zusammengeführt und aneinander fixiert werden mußten, nur noch zwei aneinander zu fixierende Elemente vorgesehen sind, da der Träger und die Leiterbahnen integriert ausgebildet sind.

In der bevorzugten Ausführungsform der Erfindung ist das Kunststoffmaterial, in welches die Leiterbahnen eingebettet bzw. integral aufgebracht sind, ein extrusionsfähiges, temperaturbeständiges thermoplastisches Kunststoffmaterial, wie z. ein Polyimid, insbesondere Polyamidimid oder ein Polyetherketon wie z. B. PEEK. Auch PTFE ist als Kunststoffträgermaterial geeignet. Das Kunststoffmaterial sollte bis mindestens 180°C, vorzugsweise bis mindestens 200°C oder darüber warmfest sein.

Die Anschlußkontakte des elektrischen Widerstandselements werden einfach mit den mindestens zwei Leiterbahnen verbunden bzw. kontaktiert, zum Beispiel durch Löten, Anschweißen oder ähnliche Kontaktierungsvorgänge und sind dann automatisch auch zumindest provisorisch an dem Träger fixiert.

Die integrierten Leiterbahnen weisen ihrerseits eine gute Wärmeleitfähigkeit auf, können über den flexiblen Träger leicht in guten Wärmekontakt mit dem Gegenstand gebracht werden, dessen Temperatur zu bestimmen ist, und tragen somit dazu bei, die Temperatur von einem über die Abmessungen des Widerstandselementes hinausgehenden Bereich effektiv auf das Widerstandelement zu übertragen.

Die im Folgenden teilweise im Zusammenhang miteinander erläuterten Merkmale bevorzugter Ausführungsformen der Erfindung sind jeweils einzeln und individuell für sich als offenbart anzusehen und mit allen anderen Merkmalen in beliebigen Zusammenstellungen kombinierbar, soweit nicht ein Merkmal zwingend ein anderes voraussetzt bzw. eine Konkretisierung eines anderen Merkmals darstellt.

Der Träger ist ein streifenförmiges Kunststoffmaterial mit einem Querschnitt, dessen Breite mindestens das Doppelte, vorzugsweise mindestens das Vierfache und noch bevorzugter mindestens das Sechsfache oder besonders bevorzugt sogar mehr als das Achtfache der Höhe des streifenförmigen Materials besteht. Dabei wird bei dem nicht-kreisförmigen Querschnitt des streifenförmigen Materials die größte Querschnittsausdehnung hier als "Breite" und die Dimension der kürzesten Ausdehnung als "höhe" bezeichnet. Zweckmäßigerweise hat ein derartiger Streifen eine Breite von mindestens 3 mm, vorzugsweise von mindestens 5 mm. In Vorversuchen praktisch getestete, streifenförmige Elemente hatten beispielsweise eine Breite in der Größenordnung von 6 bis 9 mm. Die maximale Breite beträgt in der bevorzugten Ausführungsform 25 mm, wobei Maximale Breiten von 20 mm oder 15 mm noch mehr bevorzugt sind und besonders bevorzugt die Gesamtbreite unter 12 mm liegt. Konkret können minimale Breiten von 6 mm oder weniger erzielt werden, wo dies erforderlich ist. Die Höhe bzw. Dicke des Trägers einschließlich der eingebetteten elektrischen Leiterbahnen sollte bevorzugt nicht unter 0,2 mm liegen und beträgt vorzugsweise mindestens 0,4 mm, um eine ausreichende Dicke sowohl der Leiterbahnen als auch der isolierenden Trägerschichten gewährleisten zu können. Die maximale Höhe bzw. Dicke sollte nach Möglichkeit 3 mm, besser 2 mm nicht übersteigen.

Die Querschnittsmaße des Trägers insgesamt bestimmen den maximal möglichen Querschnitt der Leiterbahnen. Zum einen müssen mindestens zwei elektrische Leiterbahnen vorgesehen sein, um die mindestens zwei Anschlußkontakte eines Widerstandselements kontaktieren zu können, um dazwischen den Widerstand des Widerstandselements zu messen. Außerdem müssen diese Leiter bahnen gegeneinander isoliert sein und sie sind vorzugsweise auch gegenüber der Umgebung durch das Trägermaterial isoliert und vorzugsweise allseitig von dem Trägermaterial umschlossen, wobei nur in den Bereichen, in denen die Anschlußkontakte des Widerstandselements mit den Leiterbahnen verbunden werden müssen, das Trägermaterial auf einer Seite dieser Leiterbahnen entfernt wird.

Außerdem dienen die elektrischen Leiterbahnen, die in aller Kegel auch gute thermische Leiter sind, für eine thermische Anbindung des elektrischen Widerstandselements an die zu messende Umgebung über, einen größeren, dem Widerstandselement benachbarten Bereich hinweg, wohingegen das Kunststoffmaterial des Trägers im allgemeinen ein schlechter Wärmeleiter ist, also die elektrische Leiterbahnen nur mit einer dünnen Schicht abdecken sollte, soweit sie für die gewünschte Isolation und auch für die mechanische Integrität des Trägers erforderlich ist. Außerdem sollten die elektrischen Leiterbahnen insgesamt einen relativ geringen Widerstand haben, da zumindest im Fall einer Zweidrahtmessung auch der Widerstand der Zuleitungen zusätzlich zu dem Widerstand des Widerstandselements gemessen wird und da auch der Widerstand der Zuleitungen im allgemeinen temperaturabhängig ist, was die Messung entsprechend ungenauer macht oder zusätzliche Korrekturen erfordert, die um so eher zu vernachlässigen sind, je kleiner der absolute Widerstand der Zuleitungen im Verhältnis zu dem Widerstand des Widerstandselements ist. Das Bestreben geht daher dahin, den Querschnitt der Leiterbahnen ausreichend groß und den Querschnitt des die Leiterbahnen einschließenden Trägermaterials so klein wie möglich, d. h. soweit dies mit den Isolationsanforderungen und den mechanischen Anforderungen als Träger vereinbar ist, zu gestalten.

Aus diesem Grund sollte der Querschnitt der einzelnen Leiterbahn ein gewisses Mindestmaß nicht unterschreiten und beträgt mindestens 0,1, bevorzugter 0,2 oder gar 0,3 mm². Andererseits sollte der Querschnitt sowohl des Trägermaterials als auch der Leiterbahnen nicht allzu groß sein, weil dies die Biegsamkeit und Beweglichkeit des Trägers einschränkt. Eine gute Flexibilität in zumindest einer Ebene erreicht man jedoch unter anderem durch die bereits erwähnten bevorzugten Verhältnisse zwischen Breite und Höhe des Querschnitts.

In der bevorzugten Ausführungsform der Erfindung sind Trägermaterial und Leiterbahnen im Querschnitt rechteckig, wobei die langen Seiten dieser Querschnitte parallel zueinander verlaufen. Die Leiterbahnen bestehen aus Kupfer, da Kupfer sowohl ein guter thermischer als auch ein guter elektrischer Leiter ist und außerdem vergleichsweise preiswert ist.

Das Trägermaterial ist vorzugsweise mit konstantem Querschnitt als Endlosmaterial hergestellt und wird in den für konkrete Thermometer benötigten Längen beliebig abgelängt. Das gleiche gilt vorzugsweise selbstverständlich auch für die in das Trägermaterial integrierten Leiterbahnen.

Für manche Anwendungszwecke ist es sinnvoll, wenn die Temperatur über eine längere Meßstrecke hinweg erfaßt wird bzw. wenn ein längerer Abschnitt eines Gegenstandes, dessen Temperatur zu bestimmen ist, erfaßt wird, der nicht ohne weiteres durch die wärmeleitenden Leiterbahnen überbrückt werden kann. Für einen solchen Zweck ist erfindungsgemäß vorgesehen, daß mehrere Widerstandselemente (d. h. mindestens zwei Widerstandselemente) über einen entsprechend langen Trägerabschnitt verteilt sind, vorzugsweise in gleichen Abständen. Die verwendeten Widerstandselemente sind vorzugsweise Dünnschichtwiderstände, insbesondere PT-Dünnschichtwiderstände, die im Vergleich zu Platindrähten relativ preiswert sind. Dabei können mehrere derartige Widerstände, die über die Länge eines Trägerabschnitts verteilt sind, parallel geschaltet werden. Man kann allerdings mehrere Widerstände auch hintereinander auf einer einzigen Leiterbahn in Reihe schalten, indem diese Leiterbahn jeweils zwischen den beiden hintereinander mit der Leiterbahn kontaktierten Anschlußbeinen jedes der Widerstände unterbrochen wird.

Die Widerstandselemente können auch teilweise in Reihe und teilweise parallel geschaltet werden.

In einer bevorzugten Ausführungsform der Erfindung weist das Trägermaterial mindestens drei Leiterbahnen auf, was es ermöglicht, mehrere darauf angeordnete Widerstände wahlweise parallel oder in Reihe zu schalten. Insbesondere können bei mindestens drei Widerständen zwei dieser Widerstände in Reihe und ein dritter parallel zu den beiden oder parallel zu einem der in Reihe geschalteten Widerstände geschaltet werden. Bei vier Widerständen ist es beispielsweise möglich, jeweils paarweise zwei Widerstände parallel zu schalten und diese parallel geschalteten Paare ihrerseits in Reihe hintereinander zu schalten oder umgekehrt. Wenn in einem solchen Fall vier nominell gleiche Widerstände verwendet werden, hat auch diese kombinierte Parallel- und Reihenschaltung denselben Widerstandwert wie jeder einzelne Widerstand, wobei man bei toleranzbehafteten Widerständen die Widerstände vor der Kontaktierung vermessen und entsprechend den konkreten Toleranzabweichungen in der Reihen- und Parallelschaltung so anordnen kann, das der zusammengeschaltete Gesamtwiderstand eine kleinere Toleranzabweichung vom Sollwert hat als der eine oder der andere der Einzelwiderstände.

Auch die Anschlußkontakte bzw. Anschlußdrähte der Widerstandselemente, insbesondere bei Dünnschichtwiderständen, tragen zum Widerstandswert bei, wobei die Längen dieser Anschlußkontakte bzw. Kontaktdrähte so angepaßt, d.h. gekürzt werden können, daß dadurch der Widerstand der Leiterbahnen kompensiert werden kann und auch etwaige Toleranzabweichungen reduziert werden können.

Ein weiterer Vorteil der Verwendung mindestens dreier Leiterbahnen liegt darin, dass man an der dritten Leiterbahn einen dritten Messabgriff vorsehen kann, so dass es möglich ist, jeweils eine der in Reihe geschalteten Gruppen paralleler Widerstände getrennt zu messen, indem der dritte Messabgriff anstelle je eines der beiden anderen, minimal vorhandenen Messabgriffe verwendet wird. Dies ermöglicht, wenn die Widerstandselemente gruppenweise hintereinander entlang der Thermometerstrecke angeordnet sind (wobei die Widerstandselemente einer Gruppe jeweils parallel geschaltet sind), eine zusätzliche Differenzierung und Ortsauflösung der gemessenen Temperatur.

In der bevorzugten Ausführungsform der vorliegenden Erfindung, bei welcher der Träger beispielsweise eine Breite von etwa 6 oder maximal 8 mm, eine Dicke von weniger als 1 mm und zum Beispiel drei eingebettete Flachleiterbahnen mit Querschnitten von jeweils 1,5 x 0,2 mm² aufweist, lassen sich durch Aufbringen von Widerstandselementen auf einer der längeren Querschnittsseiten des Trägers Thermometer herstellen, deren maximale Dicke zwischen 2 und 4 mm liegt, während die Breite in etwa der Breite des Trägers entspricht und die Länge des Trägers und damit des Thermometers dem Anwendungszweck entsprechend beliebig wählbar ist. Typische Gesamtlängen eines solchen Widerstandsthermometers betragen bei Verwendung eines einzelnen Widerstandselements beispielsweise 50 mm und bei Verwendung mehrerer Widerstandselemente sind Gesamtlängen von bis zu 1 m oder auch darüber ohne weiteres möglich. Der Abstand benachbarter Widerstandselemente sollte vorzugsweise nicht mehr als 10 cm betragen.

Vorzugsweise werden die elektrischen Dünnschichtwiderstände flach auf die ebene Oberseite des Trägers aufgelegt, die Anschlußkontakte werden mit zwei der eingebetteten Flachleiter kontaktiert und anschließend kann der Träger mit dem darauf flach aufliegenden oder gezielt flach aufgedrückten Widerstand beispielsweise mit Silikon vergossen werden. Vorzugsweise werden alle Widerstandselemente auf nur einer Seite des Trägers angebracht, obwohl für manche Anwendungszwecke auch die alternierende oder nach einem anderen Schema wechselnde Anbringung auf beiden Seiten des Trägers sinnvoll sein kann. Das Trägermaterial ist vorzugsweise hitzebeständig und flexibel, so daß es in enge Spalte oder Nuten einer Maschine eingesetzt werden kann und beispielsweise auch um gekrümmte bzw. zylindrische Maschinenteile oder sonstige Meßobjekte herumgelegt werden kann, wobei die Widerstandselemente in guten Kontakt mit der Oberfläche des zu messenden Gegenstands gebracht werden, auch wenn nur die den aufgebrachten Widerständen abgewandte Seite des Trägers mit dem zu messenden Objekt in direkten Kontakt gebracht werden kann. Die Leiterbahnen und die relativ dünne Isolierschicht auf den Leiterbahnen, sowie die flache Querschnittsform von Träger und Leiterbahnen bewirken dann immer noch einen relativ guten thermischen Kontakt zwischen Messobjekt und Widerstandselement.

Zweckmässigerweise ist der mit dem Widerstand bzw. den Widerständen mit Silikon und/oder einer Wärmeleitpaste vergossene Träger noch von einem Schrumpfschlauch umhüllt, der sich über die

### (Fortsetzung auf Seite 7 der ursprünglichen Anmeldung)

gesamte Länge des Trägers erstreckt. Der Träger kann zusätzlich in ein entsprechendes Kunststoffgehäuse oder zumindest ein Endstück eingebettet bzw. mit einem Endstück verbunden sein, welches äußere Zuleitungen aufnimmt, die mit den elektrischen Leiterbahnen des Trägers verbunden, zum Beispiel angelötet oder angeschweißt bzw. angebondet sind, wobei sich eine Stirnseite des betreffenden Trägermaterials an dem Endstück abstützt, das somit als Zugentlastung dient, wenn die Zuleitungen daran befestigt sind.

Ein besonderer Vorteil besteht darin, das in der bevorzugten Variante der vorliegenden Erfindung das Trägermaterial mit den eingebetteten Leiterbahnen in konstantem Querschnitt als Endlosmaterial hergestellt ist. Der Träger ist damit in einfacher Weise an eine beliebige gewünschte Länge anpassbar, garantiert eine gute thermische Ankopplung der Widerstandselemente und ist gleichzeitig sehr preiswert.

Weitere Vorteile, Merkmale und Anwendungsmöglichkeiten der vorliegenden Erfindung werden deutlich anhand der folgenden Beschreibung einer bevorzugten Ausführungsform und der dazugehörigen-Figuren. Es zeigen:
- Figur 1: eine Draufsicht auf ein erfindungsgemäßes Widerstandsthermometer, wobei ein abdeckender Schrumpfschlauch und die Silikonvergußmasse von der Oberfläche entfernt dargestellt sind,
- Figur 2: einen vergrößerten Ausschnitt aus Figur 1,
- Figur 3: einen Querschnitt entlang der Linie A-A in Figur 2, allerdings ohne das Gehäuse 15, und
- Figur 4: einen Querschnitt durch ein erfindungsgemäßen Trägermaterial mit teilweise entfernter Isolation von zwei Leiterbahnen.

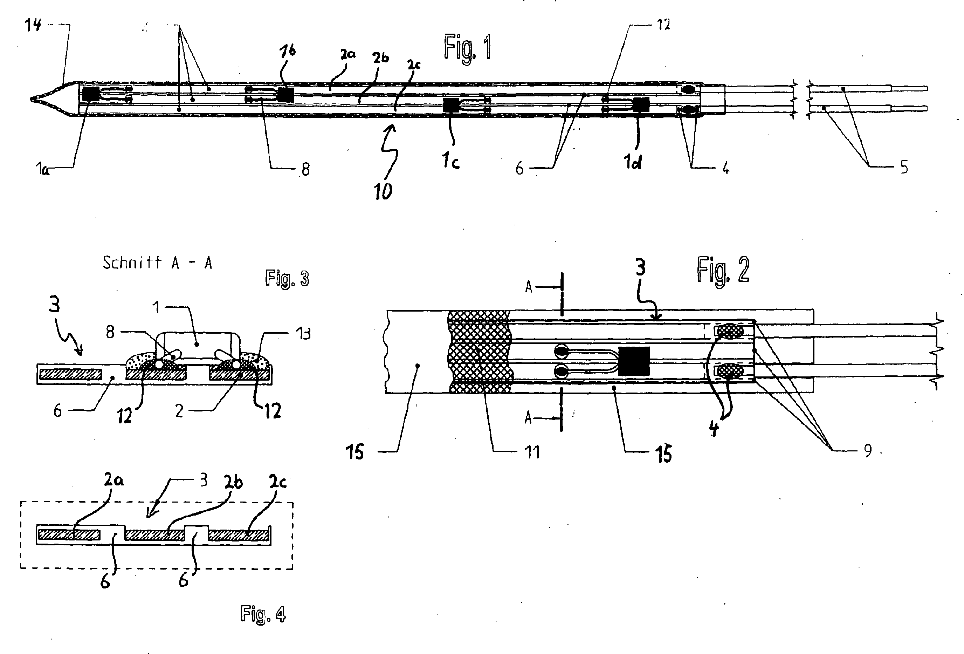

Wie man anhand der Figur 4 sieht, besteht der Träger 3 des insgesamt mit 10 bezeichneten Widerstandsthermometers aus einem im Querschnitt rechteckigen Kunststoffstreifen mit drei ebenfalls im Querschnitt rechteckigen Flachleitern, die mit 2a, 2b und 2c bezeichnet sind. Die Höhe des Trägermaterials beträgt beispielsweise 0,5 bis 0,8 mm und die Breite zwischen 6 und 8 mm. Der Querschnitt der einzelnen Leiterbahnen 2a, 2b und 2c beträgt beispielsweise 0,2 mm x 1,5 mm, also etwa 0,3 mm². Der Abstand benachbarter Leiterbahnen beträgt beispielsweise etwa 0,2 bis 0,5 mm und die Dicke der Isolierschicht auf den oberen und unteren langen Seiten des Querschnitts beträgt vorzugsweise 0, 1 bis 0,3 mm, kann jedoch bei extremen Anforderungen an die Hochspannungsfestigkeit auch dicker sein. Auch die äußeren seitlichen Isolierungen entlang der Längskanten des Trägers. 3 sollten mindestens 0,1 bis 0,5 mm oder mehr betragen. Die Isolierstege 6 zwischen den Leiterbahnen haben vorzugsweise eine Breite von mindestens 0,2, vorzugsweise mindestens 0,5 mm. In der dargestellten Version sind die Isolierstege 6 nahezu 0,5 mm breit. Das Kunststoffmaterial ist isolierend und flexibel und sehr leicht biegbar um eine Achse parallel zu der Längsseite des Querschnitts. In Figur 4 ist das Kunststoffmaterial 6 auf der Oberseite von zwei der Leiterbahnen 2b, 2c entfernt, um dort ein Widerstandselement 1 bzw. dessen Anschlußkontakte 8 kontaktieren zu können, wie es in Figur 3 dargestellt ist. Man erkennt außerdem Lötperlen 12, mit welchen die Anschlußkontakte 8 elektrisch mit den Leiterbahnen 2b, 2c verbunden sind. Des weiteren erkennt man eine Wärmeleitpaste 13, mit deren Hilfe das eigentliche Widerstandselement 1, welches einen PT-Dünnschichtwiderstand aufweist, auf der Oberfläche des Trägers 3 und in gutem Flächenkontakt zu der Oberfläche des Trägers 3 fixiert ist. Das Widerstandselement 1 ist lediglich durch eine relativ dünne Schicht des Isoliermaterial von den darunterliegenden Leiterbahnen 2b, 2c getrennt, so daß die Leiterbahnen 2b, 2c Wärme aus Bereichen, die dem Widerstandselement 1 benachbart sind, zu dem Widerstandselement 1 transportieren bzw. überschüssige Wärme von diesem ableiten können. Wahlweise kann das Widerstandsthermometer entweder mit der Rückseite, die dem Widerstandselement gegenüberliegt oder aber mit der Seite, auf welcher das Widerstandselement 1 angeordnet ist, mit dem Gegenstand in Kontakt gebracht werden, dessen Temperatur zu messen ist. Gegebenenfalls kann das Widerstandsthermometer auch in eine Nut des betreffenden Gegenstands eingesetzt und darin verklemmt oder vergossen werden, so daß eine Wärmeübertragung auf das Widerstandselement 1 von beiden Seiten her erfolgen kann.

In Figur 1 erkennt man das insgesamt mit 10 bezeichnete Widerstandsthermometer, das im Prinzip in beliebiger Länge hergestellt werden kann, da der Träger 3 ein Endlosmaterial ist, das entsprechend dem konkreten Bedarf für ein Thermometer abgelängt wird. In dem vorliegenden Beispiel der Figur 1, welche ein Widerstandsthermometer nahezu in natürlicher Größe bzw. leicht vergrößert wiedergibt, weist der Träger 3 drei parallele Leitungsbahnen 2a, 2b und 2c mit konstantem Querschnitt auf, die sich über die gesamte Länge des Trägers 3 erstrecken und mit denen insgesamt vier Widerstandselemente 1 kontaktiert sind. Am rechten Ende erkennt man zwei elektrische Zuleitungen 5, welche mit den beiden äußeren Leiterbahnen 2a und 2c in Kontakt stehen. Die Widerstände 1a, 1 b sowie 1 c und 1 d sind paarweise zwischen den Leitungen 2b und 2c bzw. 2a und 2b parallel geschaltet und weisen aufgrund der Verbindung mit der mittleren Leiterbahn 2b, die nicht mit den äuβeren Zuleitungen 5 in direktem Kontakt steht, effektiv eine Reihenschaltung der beiden links bzw. rechts dargestellten Paare auf. Die Widerstände können aber ebenso gut auch in der Weise angeordnet werden, daß abwechselnd ein Widerstand mit den Leiterbahnen 2b und 2c bzw. 2a und 2b verbunden ist., was in diesem Ausführungsbeispiel nichts an der effektiven Parallel- und Reihenschaltung ändern würde. Es könnten auch alle Widerstände parallel geschaltet sein, wobei man nur zwei Leiterbahnen benötigen würde, und die äußeren Anschlußleitungen 5 könnten entweder die Leiterbahnen 2a und 2b oder 2b und 2c kontaktieren anstatt, wie hier dargestellt, die Leiterbahnen 2a und 2c.

Wie bereits erwähnt, können die Widerstände auch in Reihe geschaltet sein, wobei dann, wenn die Zahl der Widerstände gleich oder größer ist als die Zahl der zur Verfügung stehenden Leiterbahnen, die Reihenschaltung unter anderem dadurch realisiert werden kann ,daß zumindest ein Teil der Widerstände mit jeweils beiden Anschlüssen auf derselben Leiterbahn kontaktiert ist, wobei die Leiterbahn zwischen den Anschlüssen des betreffenden Widerstandes unterbrochen ist. Um eine Reihenschaltung mit dem erfindungsgemäßen Trägermaterial zu realisieren, können aber alternativ auch die beiden Anschlüsse jedes der Widerstände jeweils mit einer anderen Leiterbahn verbunden sein, wenn abwechselnd je eine der Leiterbahnen zwischen aufeinanderfolgenden Widerständen unterbrochen ist. Mit Vorteil kann dann eine dritte Leiterbahn als Rückleiter verwendet werden, um alle Anschlüsse des Thermometers gemeinsam an einem Ende des Trägers zu haben.

Die Länge der elektrischen Anschlußdrähte 8, die einen Teil des Messwiderstandes ausmachen, wird in geeigneter Weise abgestimmt, um den Zuleitungswiderstand der Zuleitungen bzw. der Leiterbahnen 2a, 2b und 2c gegebenenfalls zu kompensieren. D. h. die Anschlussdrähte 8 der von den äußeren Anschlusskabeln 5 bzw. den äußeren Anschlußkontakten 4 weiter entfernten Widerstandselemente (z. B. 1a) können stärker gekürzt sein als die den Kabeln 5 näher liegenden Widerstandselemente (z. B. 1 d). Die äußeren Zuleitungen oder Anschlusskabel 5 können insbesondere auch die doppelte Zahl (also 4) elektrischer Leiter aufweisen um möglichst nahe an den Leiterbahnen 2a, 2b; 2c zu einer 4-Punkt Messung des Widerstandes überzugehen. Bei der dargestellten kombinierten Reihen- und Parallelschaltung der vier Widerstände und unter der Annahme, daß alle vier Widerstände den gleichen Nennwert haben, hat auch die Gesamtheit der vier in dieser Weise verschalteten Widerstandselemente 1 denselben Nennwert wie jeder einzelne Widerstand. Wie bereits erwähnt, kann man durch geschickte Kombination der einzelnen Widerstände, die jeder für sich gewisse Toleranzabweichungen haben können, demgegenüber die Toleranzabweichung des kombinierten Widerstands reduzieren. Die maximale Zahl der Widerstandselemente 1 auf einem Träger 3 ist nicht begrenzt und hängt lediglich von dem auf einem gegebenen Trägerabschnitt verfügbaren Platz ab, wobei es aber im allgemeinen nicht erforderlich ist, die Widerstandselemente in sehr engem Abstand anzuordnen, da über die Leiterbahnen, aber auch über etwaige benachbarte Maschinenteile oder dergleichen ohnehin eine gewisse Temperaturmittelung über einen größeren Bereich erzielt wird, der ein Mehrfaches der thermischen Kontaktfläche des einzelnen Widerstandselements 1 beträgt. Die Widerstandselemente 1 sind, wie man auch in Figur 3 erkennen kann, im wesentlichen flache, quaderförmige Elemente, deren Breite auf jeden Fall geringer ist als die Breite des Trägers 3, und deren Dicke vorzugsweise weniger als 1 mm, z. B. 0,9 mm, beträgt. Für einen guten Wärmekontakt sollten die äußeren Kontaktflächen der Dünnschichtwiderstände vorzugsweise mindestens 2mm², vorzugsweise mindestens 3 bis 4 mm² betragen.

Der Träger 3 mit den aufgebrachten und kontaktierten Widerstandselementen 1 a, 1 b, 1 c, 1 d kann gegebenenfalls entweder beschränkt auf die einzelnen Widerstandselemente oder aber über seine gesamte Länge hinweg mit einer Wärmekontaktpaste 13, einem Silikonkleber oder einem anderen Schutz- und Bindematerial vergossen sein, so daß das fertige Widerstandsthermometer dann insgesamt eine Dicke hat, die kaum mehr als die Summe der Dicke des Trägers 3 und eines der Widerstandselemente 1 beträgt. Schließlich kann der gesamte Träger mit den vergossenen Widerstandselementen noch in einen Schrumpfschlauch 14 oder in ein vorzugsweise dünnwandiges, isolierendes Gehäuse eingehüllt werden, wobei in Figur 1 die Schrumpfschlauchversion an den oberen und unteren Rändern des Trägers 3 und am links- und rechtsseitigen Ende des Thermometers 10 ebenfalls dargestellt ist. Als Gehäuse könnte im übrigen auch ein nicht isolierendes Gehäuse, beispielsweise aus einem weichen, oder dünnwandigem Metallmaterial, welches mit dem Träger und den Widerständen verpresst ist, vorgesehen sein, welches eine gute Temperaturverteilung und Wärmekontakt zu den Widerstandselementen gewährleistet, was aber voraussetzt, dass die Leiterbahnen und Widerstandselemente gut gegen das Gehäuse isoliert sind. Dies könnte z. B. durch die Kombination aus einem inneren, isolierenden Schrumpfschlauch und einem den Schrumpfschlauch umgebenden, äußeren Metallgehäuse sichergestellt werden.

Figur 2 zeigt eine Vergrößerung des rechten Endes des Widerstandsthermometers 10, jedoch mit einer Modifikation, indem der Schrumpfschlauch 14 nach Figur 1 durch ein Gehäuse 15 ersetzt ist, das allerdings auch zusätzlich zu einem Schrumpfschlauch 14 vorgesehen sein kann. Das Gehäuse 15 ist ebenfalls ein flaches, im Querschnitt rechteckiges Gehäuse mit einer Aussparung, die ziemlich genau der Breite und Höhe des Trägermaterials, gegebenenfalls zusätzlich mit den eingegossenen Widerstandselementen 1, entspricht. Die rechts erkennbare Stirnseite 9 des Trägers 3 stützt sich an dem rechten Ende der entsprechenden Aussparung in dem Gehäuse 15 ab und die Zuleitungen 5 sind durch zwei Spalte oder Bohrungen in dem rechtsseitigen Ende des Gehäuses 15 hindurchgeführt und mit den Bahnen 2a und 2c kontaktiert. Dadurch, daß die Stirnseite 9 des Trägers 3 sich in dem Gehäuse abstützt, bildet dies effektiv eine Zugentlastung für die Anschlussdrähte bzw. -kabel 5, die außerdem noch in dem Gehäuse fixiert werden können, was hier aber nicht dargestellt ist. Das Gehäuse kann auch lediglich als kurzes Endstück ausgebildet sein, welches nur einen kurzen Endabschnitt des Thermometers 10 aufnimmt, der lediglich beispielsweise die Anschlußkontakte für die Zuleitungen 5 umfaßt. Auf diese Weise wird vermieden, daß das Gehäuse 15 den thermischen Kontakt des nächstliegenden Widerstandelements 1 mit der Umgebung beeinträchtigt. Jedes der Kabel 5 kann zwei gegeneinander isolierte Anschlussdrähte enthalten, die zwecks 4-Punkt-Messung gemeinsam an den Kontaktstellen 4 angeschlossen sind.

Alternativ kann das Gehäuse 15 auch aus einem Metall, vorzugsweise einem Weichmetall und insbesondere aus einer Metallfolie oder einem Metallgeflecht oder -Gewebe bestehen und mit dem Widerstandsthermometer für einen guten thermischen Kontakt verpresst sein, wobei dann allerdings das Thermometer 10 gegen das Gehäuse 15 isoliert sein muß, beispielsweise durch einen Schrumpfschlauch 14 innerhalb des Gehäuses 15.

Die erfindungsgemäßen Widerstandsthermometer sind relativ einfach und preiswert herzustellen, sind in der bevorzugten Variante äußerst flexibel und sind deshalb für sehr viele verschiedene Anwendungszwecke geeignet.

## Patentansprüche

1. Widerstandsthermometer mit mindestens einem temperaturabhängigen, elektrischen Widerstandselement (1), welches mindestens zwei Anschlusskontakte (8) aufweist, einem Träger (3), auf welchem das Widerstandselement in der Weise fixierbar ist, dass es mit einem Gegenstand, dessen Temperatur zu messen, in guten thermischen Kontakt bringbar ist, und mit elektrischen Zuleitungen (2, 5), welche für die Verbindung der elektrischen Anschlusskontakte (8) mit einem Messinstrument vorgesehen sind, wobei das Widerstandsthermometer als Nutenthermometer in Form eines dünnen länglichen Quaders mit einer Länge von mindestens 50 mm und bis zu einem Meter, einer Breite von 3 bis 15 mm und einer Höhe von 1 bis 5 mm ausgebildet ist, wobei als Träger (3) ein bis zumindest 180 °C wärmebeständiges, in mindestens einer Richtung leicht biegbares Kunststoffmaterial vorgesehen ist, welches streifenförmig ist und einen Querschnitt hat, dessen Breite mindestens das Vierfache der Höhe beträgt, wobei mindestens zwei elektrische Leiterbahnen (2a, 2b, 2c)) die ihrerseits einen Querschnitt haben, dessen Breite mindestens das Zweifache der Querschnittshöhe beträgt, in das Trägermaterial eingebettet sind und die Leiterbahnen in einer gemeinsamen Ebene in dem Trägermaterial verlaufen, wobei die Widerstandselemente Platindünnschichtwiderstände mit Anschlussdrähten (8) sind, und wobei die Leiterbahnen aus Kupfer mit einem Querschnitt von mindestens 0,1 mm² bestehen.

2. Widerstandsthermometer nach Anspruch 1, **dadurch gekennzeichnet, dass** das streifenförmige Querschnittsmaterial eine Breite hat, die mindestens das Sechsfache und besonders bevorzugt mehr als das Achtfache der Höhe bzw. Dicke des streifenförmigen Materials beträgt.

3. Widerstandsthermometer nach einem der Ansprüche 1 oder 2, **dadurch gekennzeichnet, dass** die elektrischen Leiterbahnen (2a, 2b, 2c) jeweils einen Querschnitt haben, dessen Breite mehr als das Vierfache der Querschnittshöhe beträgt.

4. Widerstandsthermometer nach einem der Ansprüche 1 bis 3 **dadurch gekennzeichnet, dass** der Querschnitt des Trägers und vorzugsweise auch der Querschnitt der elektrischen Leiter im wesentlichen rechtwinklig ist, wobei die langen Querschnittsseiten von Träger und elektrischen Leitern parallel verlaufen.

5. Widerstandsthermometer nach einem der Ansprüche 1 bis 7, **dadurch gekennzeichnet, dass** die Leiterbahnen aus Kupfer mit einem Querschnitt von mindestens 0,2 mm², bestehen.

6. Widerstandsthermometer nach einem der Ansprüche 1 bis 8, **dadurch gekennzeichnet, dass** das Widerstandselement gemeinsam mit dem Träger mit Silikon und/oder Wärmeleitpaste (13) vergossen ist.

7. Widerstandsthermometer nach einem der Ansprüche 1 bis 9, **dadurch gekennzeichnet, dass** Träger und Widerstandselement von einem Schrumpfschlauch oder Gehäuse umhüllt sind.

## Claims

1. A resistance thermometer comprising at least one temperature-dependent electrical resistance element (1) which has at least two connection contacts (8), a carrier (3) on which the resistance element can be fixed in such a way that it can be put into good thermal contact with an object the temperature of which is to be measured, and electrical supply lines (2, 5) provided for connecting the electrical connection contacts (8) to a measuring instrument, wherein the resistance thermometer is in the shape of a groove thermometer in form of a thin elongated cuboid having a length of at least 50 mm to 1 m, a width of 3 to 15 mm and a height of 1 to 5 mm, **characterised in that** provided as the carrier (3) is an at least up to 180° C heat-resistant plastic material which is easily bendable in at least one direction, which is in strip form and has a cross-section whose width is at least four times the height, wherein at least two electrical conductor tracks (2a, 2b, 2c), which have a cross-section whose width is at least twice the cross-sectional height are embedded in the carrier material and the conductor tracks extend in a common plane within the carrier material, wherein the resistance elements are platinum thin-layer resistances with connection wires (8), and wherein the conductor tracks are made of copper with a cross-section of at least 0.1 mm².

2. A resistance thermometer according to claim 1, **characterised in that** the cross-sectional material in strip form is of a width which is at least six times and preferably at least eight times and particularly preferably more than eight times the height or thickness of the material in strip form.

3. A resistance thermometer according to one of claims 1 or 2, **characterised in that** the electrical conductor tracks (2a, 2b, 2c) are of a cross-section whose width is more than four times the cross-sectional height.

4. A resistance thermometer according to one of claims 1 to 3 **characterised in that** the cross-section of the carrier and preferably also the cross-section of the electrical conductors is substantially right-angled, wherein the long sides of the cross-section of the carrier and the electrical conductors extend parallel.

5. A resistance thermometer according to one of claims 1 to 4 **characterised in that** the conductor tracks are made of copper with a cross-section of at least 0.2 mm².

6. A resistance thermometer according to one of claims 1 to 5 **characterised in that** the resistance element is jointly encased by casting with the carrier with silicone and/or heat-conducting paste (13).

7. A resistance thermometer according to one of claims 1 to 6 **characterised in that** the carrier and the resistance element are encased by a shrink tube or a housing.

## Revendications

1. Thermomètre à résistance, comportant au moins un élément résistif électrique (1) dépendant de la température, qui comprend au moins deux contacts de connexion (8), un support (3), sur lequel l'élément résistif peut être fixé de façon à pouvoir être mis en bon contact thermique avec un objet dont la température est à mesurer, ainsi que des lignes électriques (2, 5), qui sont prévues pour le raccordement des contacts de connexion électriques (8) avec un instrument de mesure, le thermomètre à résistance étant configuré comme un thermomètre à encoche sous forme d'un parallélépipède oblong et mince, ayant une longueur d'au moins 50 mm et allant jusqu'à un mètre, une largeur de 3 à 15 mm et une hauteur de 1 à 5 mm, un matériau plastique facilement flexible dans au moins une direction, résistant à la chaleur jusqu'à au moins 180°C, étant prévu en tant que support (3), ce matériau se présentant sous forme d'un ruban et ayant une section transversale dont la largeur est au moins le quadruple de la hauteur, au moins deux pistes conductrices électriques (2a, 2b, 2c), qui pour leur part ont une section transversale dont la largeur est au moins égale au double de la hauteur de la section transversale, étant noyées dans le matériau support, et les pistes conductrices courant dans un plan commun dans le matériau support, les éléments résistifs étant des résistances à couche mince de platine, avec des fils de connexion (8), les pistes conductrices étant constituées de cuivre, avec une section transversale d'au moins 0,1 mm².

2. Thermomètre à résistance selon la revendication 1, **caractérisé en ce que** le matériau de la section transversale en forme de ruban a une largeur qui est au moins le sextuple et en particulier de préférence supérieure à l'octuple de la hauteur ou de l'épaisseur du matériau en forme de ruban.

3. Thermomètre à résistance selon l'une des revendications 1 ou 2, **caractérisé en ce que** chacune des pistes conductrices électriques (2a, 2b, 2c) a une section transversale dont la largeur est supérieure au quadruple de la hauteur de la section transversale.

4. Thermomètre à résistance selon l'une des revendications 1 à 3, **caractérisé en ce que** la section transversale du support et de préférence aussi la section transversale des conducteurs électriques sont pour l'essentiel rectangulaires, les grands côtés des sections transversales, du support et des conducteurs électriques, étant parallèles.

5. Thermomètre à résistance selon l'une des revendications 1 à 7, **caractérisé en ce que** les pistes conductrices sont constituées de cuivre avec une section transversale d'au moins 0,2 mm².

6. Thermomètre à résistance selon l'une des revendications 1 à 8, **caractérisé en ce que** l'élément résistif est coulé en même temps que le support avec une silicone ou une pâte thermo-conductrice (13).

7. Thermomètre à résistance selon l'une des revendications 1 à 9, **caractérisé en ce que** le support et l'élément résistif sont entourés d'une gaine rétractable ou d'une enveloppe.
